(19) Europäisches Patentamt / European Patent Office / Office européen des brevets

(11) **EP 3 384 145 B1**

(12) **FASCICULE DE BREVET EUROPEEN**

(45) Date de publication et mention
de la délivrance du brevet:
**14.10.2020 Bulletin 2020/42**

(21) Numéro de dépôt: **16813014.4**

(22) Date de dépôt: **24.11.2016**

(51) Int Cl.:
*F02D 35/02* (2006.01)　　*F02D 41/00* (2006.01)
*G01M 15/06* (2006.01)　　*G01M 15/08* (2006.01)

(86) Numéro de dépôt international:
**PCT/FR2016/053070**

(87) Numéro de publication internationale:
**WO 2017/093638 (08.06.2017 Gazette 2017/23)**

(54) **PROCÉDÉ D'ESTIMATION DE MASSE ENFERMÉE DANS LA CHAMBRE DE COMBUSTION D'UN CYLINDRE D'UN MOTEUR À COMBUSTION INTERNE DE VÉHICULE AUTOMOBILE**

VERFAHREN ZUR SCHÄTZUNG DER MASSE, DIE IN DER BRENNKAMMER EINES ZYLINDERS EINES KRAFTFAHRZEUGVERBRENNUNGSMOTORS ENTHALTEN IST

METHOD OF ESTIMATING THE MASS ENCLOSED IN THE COMBUSTION CHAMBER OF A CYLINDER OF A MOTOR VEHICLE INTERNAL COMBUSTION ENGINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.12.2015 FR 1561870**

(43) Date de publication de la demande:
**10.10.2018 Bulletin 2018/41**

(73) Titulaire: **Renault S.A.S.**
**92100 Boulogne-Billancourt (FR)**

(72) Inventeurs:
• **TALON, Vincent**
**69007 Lyon (FR)**
• **CASTILLO, Felipe**
**38000 Grenoble (FR)**

(56) Documents cités:
**EP-A2- 1 473 452**　　**WO-A1-2007/060349**
**FR-A1- 2 847 619**　　**FR-A1- 2 875 268**
**JP-A- 2007 077 838**　　**JP-A- 2011 058 377**
**US-A1- 2015 330 334**

**Description**

L'invention a pour domaine technique le contrôle d'un moteur à combustion interne.

Les normes de dépollution obligent les constructeurs automobiles à développer de nouvelles stratégies pour mieux maîtriser la qualité de la combustion des moteurs essence et diesel, afin notamment d'estimer et contrôler les émissions polluantes, en particulier les oxydes d'azotes NOx.

Une solution pour estimer les NOx consiste à utiliser un capteur de pression cylindre monté en série sur certains véhicules. Grace à ce capteur, il est possible de connaître la pression dans le cylindre à chaque instant. Malheureusement, la formation des oxydes d'azotes NOx varie comme une fonction d'ordre 1 en fonction de la température dans le cylindre. La température (T) d'un mélange gazeux peut être déterminée en première approximation, par application de l'équation des gaz parfaits (P*V=m*r*T), si on connaît la pression cylindre (P) et la masse enfermée (m) dans le cylindre. Le volume (V) est une fonction géométrique fonction de l'angle vilebrequin, et R est la constante des gaz parfaits.

Or, il n'existe pas de capteur de masse enfermée dans une chambre de combustion.

On estime classiquement cette masse enfermée par des cartographies de remplissage, mais qui ne sont pas assez précises pour l'estimation des émissions polluantes.

Il existe également des capteurs d'émissions polluantes et en particulier des capteurs d'oxydes d'azote NOx, qui peuvent être installés sur les lignes d'échappement. Toutefois, le coût de tels capteurs ne rend pas cette solution viable économiquement.

On peut également estimer les émissions d'oxydes d'azotes en utilisant un estimateur d'oxydes d'azotes NOx avec capteur de pression cylindre Pcyl mais sans estimation de masse enfermée, tel que décrit dans les documents WO2009047412 et FR2945320.

Alternativement, on peut également utiliser un estimateur NOx sans capteur de pression cylindre Pcyl moins cher que la version avec capteur de pression cylindre. Un tel estimateur est par exemple décrit dans le document WO2015/059034. JP 2007 077838 A divulgue une estimation de température dans la chambre de combustion.

Toutefois, dans les deux cas, l'estimation d'oxydes d'azotes NOx émis n'est pas assez robuste et précise pour les normes de dépollution actuelles.

Il existe donc un besoin d'un procédé de détermination de la masse enfermée dans le cylindre grâce à la mesure de pression cylindre, afin de déterminer la température et la quantité produite d'oxydes d'azote NOx.

L'invention a pour objet un procédé d'estimation de masse enfermée dans la chambre de combustion d'un cylindre d'un moteur à combustion interne de véhicule automobile, muni d'un moyen de mesure de la pression dans le cylindre, d'un moyen de mesure de l'angle du vilebrequin par rapport à une position de référence et de la température du liquide de refroidissement de la chambre de combustion. Le procédé comprend des étapes au cours desquelles on détermine la vitesse de rotation du moteur à partir de la mesure de l'angle du vilebrequin, et on détermine la charge du moteur.

Le procédé comprend également les étapes suivantes. Lorsque les soupapes du cylindre sont complètement fermées et avant la première injection de carburant,

on détermine le volume du cylindre en fonction de l'angle du vilebrequin,

on détermine des paramètres de calibration liés aux pertes de chaleur aux parois en fonction d'une cartographie fonction de la vitesse de rotation du moteur,

on détermine la température modélisée dans le cylindre par un modèle zéro dimension non linéaire de la pression et la température dans la chambre de combustion, fonction de la mesure de pression dans le cylindre, de la constante spécifique des gaz dans le cylindre, de la chaleur spécifique à volume constant des gaz dans le cylindre, du volume de la chambre de combustion, et de paramètres de calibration liés aux pertes de chaleur aux parois, et

on détermine l'estimation de la masse enfermée dans le cylindre en fonction de la température modélisée dans le cylindre et de la mesure de pression dans le cylindre.

Pour résoudre le modèle zéro dimension non linéaire, on peut employer un observateur glissant.

La cartographie des paramètres de calibration liés aux pertes de chaleur aux parois peut être prédéterminée sur banc d'essai, en fonction d'une mesure des pertes de chaleur aux parois, d'une mesure de la température de cylindre et de la température du liquide de refroidissement du cylindre en appliquant la loi de Woschni.

On peut déterminer la masse enfermée dans le cylindre en fonction de la température modélisée dans le cylindre, de la mesure de pression dans le cylindre, du volume du cylindre, et de la constante spécifique des gaz admis dans le cylindre.

D'autres buts, caractéristiques et avantages de l'invention apparaîtront à la lecture de la description suivante, donnée uniquement à titre d'exemple non limitatif.

Le procédé d'estimation de masse enfermée dans la chambre de combustion se base sur un modèle 0D qui décrit la dynamique de la pression et la température dans la chambre de combustion. Le système d'équations suivant illustre ce modèle :

$$\dot{p}_{cyl} = \frac{r}{V(t)c_v} dm_{h\,int}(t) - \frac{r}{V(t)c_v} dm_{h\,ext}(t) - \left(\frac{r}{c_v}+1\right)\frac{dV(t)}{V(t)} p_{cyl}(t) + \frac{r}{V(t)c_v} dm_{h_{comb}}(t) \qquad (\text{Eq. 1})$$

$$- \frac{r}{V(t)c_v} \delta Q_{par}(t)$$

$$\dot{T}_{cyl} = r\frac{dV(t)}{V(t)c_v} T_{cyl}(t) - r\frac{T_{cyl}(t)}{c_v V(t) p_{cyl}(t)} \delta Q_{par}(t) + r\frac{T_{cyl}(t)}{c_v V(t) p_{cyl}(t)} dm_{h\,int}(t) - r\frac{T_{cyl}(t)}{c_v V(t) p_{cyl}(t)} dm_{h\,ext}(t) \qquad (\text{Eq. 2})$$

$$+ r\frac{T_{cyl}(t)}{c_v V(t) p_{cyl}(t)} dm_{h_{comb}}(t) - r\frac{T_{cyl}{}^2(t)}{c_v V(t) p_{cyl}(t)} \dot{m}_{cyl}(t)$$

Avec :

$p_{cyl}$ : la pression dans la chambre de combustion,
$T_{cyl}$ : la température dans la chambre de combustion,
$r$ : la constante spécifique des gaz dans le cylindre,
$c_v$ : la chaleur spécifique à volume constant,
$V$ : le volume de la chambre de combustion (grandeur géométrique fonction de l'angle du vilebrequin : Thêta),
$dm_{h_{int}}$, le débit d'enthalpie associé à l'admission,
$dm_{h_{ext}}$ : le débit d'enthalpie associé à l'échappement,
$dm_{h_{comb}}$ : le débit d'enthalpie associé à la combustion,
$m_{cyl}$ : la masse dans la chambre de combustion et
$\delta Q_{par}$ : les pertes parois.

La masse enfermée peut être estimée à partir des équations (1) et (2) en appliquant au cylindre la loi des gaz parfaits décrite par l'équation suivante :

$$m_{cyl}(t) = \frac{p_{cyl}(t)V(t)}{rT_{cyl}(t)} \qquad (\text{Eq. 3})$$

Donc, le problème de l'estimation de la masse enfermée peut être exprimé comme le problème d'estimation de la température $T_{cyl}$ de l'équation Eq. 2 à partir de la mesure de $p_{cyl}$. Comme il peut être constaté, Le système d'équation Eq. 1 et Eq. 2 est un système très complexe et difficile à gérer au niveau de l'observation. Pour cette raison, on considère uniquement certaines phases de la course du moteur pour rendre la température plus facilement estimable.
On pose ainsi les hypothèses suivantes :

• On ne prend en compte que l'intervalle de temps pendant lequel les soupapes sont complètement fermées ;
• On estime la masse entre la fermeture complète des soupapes et la première injection de carburant.

Ces hypothèses permettent d'annuler les termes associés aux débits enthalpiques, ce qui simplifie de manière significative le problème d'estimation de la température.
On peut alors reformuler les équations Eq. 1 et Eq. 2 de la façon suivante :

$$\dot{p}_{cyl} = -\left(\frac{r}{c_v}+1\right)\frac{dV(t)}{V(t)} p_{cyl}(t) - \frac{r}{V(t)c_v} \delta Q_{par}(t) \qquad (\text{Eq. 4})$$

$$\dot{T}_{cyl} = r\frac{dV(t)}{V(t)c_v} T_{cyl}(t) - r\frac{T_{cyl}(t)}{c_v V(t) p_{cyl}(t)} \delta Q_{par}(t) \qquad (\text{Eq. 5})$$

En parallèle, on modélise les pertes parois $\delta Q_{par}$ avec l'approximation de Woschni donnée par :

$$\delta Q_{par}(t) = A_w w p_{cyl}(t)\left(k_1 T_{cyl}(t) - k_0 T_w\right) \qquad (\text{Eq 6})$$

Avec :

$A_w$ : la surface de transfert de chaleur,
w : la vitesse de rotation du moteur en rad/s,
$T_w$ : la température des parois,
$k_0$ et $k_1$ : des paramètres de calibration.

On note que l'on considère que la température des parois Tw est sensiblement égale à la température du liquide de refroidissement.

La loi de Woschni est connue de la littérature. En remplaçant les pertes parois $\delta Q_{par}$ données par l'équation Eq. 6 dans les équations Eq. 4 et Eq. 5, on obtient le système suivant :

$$\dot{p}_{cyl} = \left[ -\left(\frac{r}{c_v}+1\right)\frac{dV(t)}{V(t)} + r\frac{k_0 A_w w}{V(t)c_v}T_w(t)\right]p_{cyl}(t) - r\frac{k_1 A_w w}{V(t)c_v}p_{cyl}(t)T_{cyl}(t) \quad (\text{Eq. 7})$$

$$\dot{T}_{cyl} = \left[ r\frac{dV(t)}{V(t)c_v} + r\frac{k_0 A_w T_w w}{c_v V(t)}\right]T_{cyl}(t) - r\frac{k_1 A_w w}{c_v V(t)}T_{cyl}^{\,2}(t) \qquad (\text{Eq. 8})$$

Comme on peut constater, le système d'équations Eq. 7 et Eq. 8 reste assez complexe à résoudre à cause de non-linéarités et variations paramétriques.

On propose alors d'employer une stratégie d'observation en mode glissant (stratégie non-linéaire) pour estimer la température dans la chambre de combustion, qui permet d'estimer la masse enfermée.

Pour cela, on utilise l'observateur à mode glissant (technique connue de la littérature) suivant pour estimer la température dans la chambre de combustion :

$$\dot{\hat{p}}_{cyl} = a_1(t)p_{cyl}(t) - b_1(t)\hat{T}_{cyl}(t) + \lambda_1 \, \text{sgn}\left(p_{cyl}(t) - \hat{p}_{cyl}(t)\right) \qquad (\text{Eq. 9})$$

$$\dot{\hat{T}}_{cyl} = a_2(t)\tilde{T}_{cyl}(t) - b_2(t)\tilde{T}_{cyl}^{\,2}(t) + \lambda_2 \, \text{sgn}\left(\tilde{T}_{cyl}(t) - \hat{T}_{cyl}(t)\right) \qquad (\text{Eq. 10})$$

Avec :

$$a_1(t) = -\left(\frac{r}{c_v}+1\right)\frac{dV(t)}{V(t)} + r\frac{k_0 A_w w}{V(t)c_v}T_w(t), b_1 = r\frac{k_1 A_w w}{V(t)c_v}p_{cyl}(t)$$
$$a_2(t) = r\frac{dV(t)}{V(t)c_v} + r\frac{k_0 A_w T_w w}{c_v V(t)}, b_2(t) = r\frac{k_1 A_w w}{c_v V(t)} \qquad (\text{Eq. 11})$$

$\hat{p}_{cyl}$ : la valeur estimée de la pression dans la chambre de combustion,
$\hat{T}_{cyl}(t)$ : la valeur estimée de la température dans la chambre de combustion et
$\lambda_1$, et $\lambda_2$ : des paramètres de l'observateur et

La température modélisée $\tilde{T}_{cyl}(t)$ est définie de la façon suivante :

$$\tilde{T}_{cyl}(t) = \hat{T}_{cyl} + \frac{\lambda_1}{b_1(t)}\text{sgn}\left(p_{cyl}(t) - \hat{p}_{cyl}(t)\right) \qquad (\text{Eq. 12})$$

On pose les conditions suivantes :

$$\left|\lambda_1\right| > \left|b_1(t)\left(\tilde{T}_{cyl}(t) - \hat{T}_{cyl}(t)\right)\right|, \lambda_1 > 0 \ et \ \lambda_2 > 0 \qquad (Eq.\ 13)$$

Il peut être démontré que si les conditions Eq. 13 sont satisfaites, alors l'erreur d'estimation de la température converge asymptotiquement vers zéro, ce qui permet d'estimer la masse enfermée.

Les paramètres $\lambda_1$, et $\lambda_2$ peuvent être calibrés pour régler la vitesse de convergence de l'observateur dès que les conditions Eq. 13 sont satisfaites.

Le procédé d'estimation de masse enfermée dans la chambre de combustion comprend les étapes suivantes.

Au cours d'une première étape 1, on détermine la mesure de la pression cylindre $p_{cyl}$, l'angle moteur Theta, et la température du liquide de refroidissement $T_w$.

Au cours d'une deuxième étape, on détermine les paramètres $k_0$ et $k_1$ de pertes de chaleur aux parois en fonction d'une cartographie des pertes de chaleur aux parois en fonction de la vitesse de rotation du moteur. La cartographie est déterminée par calibration des paramètres $k_0$ et $k_1$ de l'équation Eq. 6.

Au cours d'une quatrième étape 4, on détermine la température modélisée dans le cylindre $\tilde{T}_{cyl}(t)$ par l'intermédiaire d'un modèle 0D de la pression et la température dans le cylindre fonction de la mesure de pression dans le cylindre $p_{cyl}$, des paramètres $k_0$ et $k_1$ de pertes de chaleur aux parois et de paramètres structurels du cylindre. Pour cela, on applique les équations Eq. 7, Eq. 8.

Au cours d'une cinquième étape 5, on détermine la masse enfermée dans le cylindre en fonction de la température modélisée dans le cylindre $\tilde{T}_{cyl}(t)$, de la mesure de pression dans le cylindre $p_{cyl}$, du volume du cylindre V(t) fonction de l'angle moteur Theta, et de la constante spécifique r des gaz dans le cylindre par application de l'équation Eq. 3.

On réalise ainsi une estimation en boucle ouverte de la masse enfermée dans le cylindre, c'est-à-dire sans rebouclage du modèle de la température dans la chambre de combustion $T_{cyl}$ sur la mesure de la pression dans la chambre de combustion $p_{cyl}$. Cela entraînant un risque de divergence de la température dans la chambre de combustion et donc de la masse enfermée, on peut alternativement rendre plus robuste l'estimation de la masse $m_{cyl}$ en employant un observateur glissant dépendant des paramètres $\lambda_1$ et $\lambda_2$ de l'observateur. On applique alors les équations Eq. 9 et Eq. 8 en lieu et place des équations Eq. 7 et Eq. 8. On détermine les paramètres $\lambda_1$ et $\lambda_2$ de façon à régler la vitesse de convergence de l'observateur. La vitesse de convergence allant à l'encontre de la stabilité de l'observateur, le choix des paramètres résulte d'un compromis entre la rapidité de la convergence et la stabilité.

## Revendications

**1.** Procédé d'estimation de masse enfermée dans la chambre de combustion d'un cylindre d'un moteur à combustion interne de véhicule automobile, muni d'un moyen de mesure de la pression dans le cylindre, d'un moyen de mesure de l'angle du vilebrequin par rapport à une position de référence et de la température du liquide de refroidissement de la chambre de combustion,

le procédé comprenant des étapes au cours desquelles
on détermine la vitesse de rotation du moteur à partir de la mesure de l'angle du vilebrequin,
on détermine la charge du moteur,
**caractérisé par le fait qu'**il comprend les étapes suivantes :

lorsque les soupapes du cylindre sont complétement fermées et avant la première injection de carburant,
on détermine le volume du cylindre en fonction de l'angle du vilebrequin,
on détermine des paramètres de calibration liés aux pertes de chaleur aux parois en fonction d'une cartographie fonction de la vitesse de rotation du moteur,
on détermine la température modélisée dans le cylindre par un modèle zéro dimension non linéaire de la pression et la température dans la chambre de combustion, fonction de la mesure de pression dans le cylindre, de la constante spécifique des gaz dans le cylindre, de la chaleur spécifique à volume constant des gaz dans le cylindre, du volume de la chambre de combustion et de paramètres de calibration liés aux pertes de chaleur aux parois, et
on détermine l'estimation de la masse enfermée dans le cylindre en fonction de la température modélisée dans le cylindre et de la mesure de pression dans le cylindre.

**2.** Procédé selon la revendication 1, dans lequel, pour résoudre le modèle zéro dimension non linéaire, on emploie un observateur glissant.

3. Procédé selon l'une quelconque des revendications précédentes, dans lequel la cartographie des paramètres de calibration liés aux pertes de chaleur aux parois est prédéterminée sur banc d'essai, en fonction d'une mesure des pertes de chaleur aux parois, d'une mesure de la température de cylindre et de la température du liquide de refroidissement du cylindre en appliquant la loi de Woschni.

4. Procédé selon l'une quelconque des revendications précédentes, dans lequel on détermine la masse enfermée dans le cylindre en fonction de la température modélisée dans le cylindre, de la mesure de pression dans le cylindre, du volume du cylindre, et de la constante spécifique des gaz admis dans le cylindre.

**Patentansprüche**

1. Verfahren zur Schätzung der Masse, die in der Brennkammer eines Zylinders eines Kraftfahrzeugverbrennungsmotors, der mit einem Mittel zum Messen des Drucks in dem Zylinder, mit einem Mittel zum Messen des Kurbelwellenwinkels zu einer Bezugsposition und der Temperatur der Kühlflüssigkeit in der Brennkammer versehen ist, eingeschlossen ist,
   wobei das Verfahren Schritte umfasst, bei denen
   die Drehzahl des Motors ausgehend von der Messung des Kurbelwellenwinkels bestimmt wird,
   die Motorlast bestimmt wird,
   **dadurch gekennzeichnet, dass** es die folgenden Schritte umfasst:

   wenn die Zylinderventile komplett geschlossen sind und vor der ersten Kraftstoffeinspritzung,
   Bestimmen des Zylindervolumens als Funktion des Kurbelwellenwinkels,
   Bestimmen von Kalibrierungsparametern im Zusammenhang mit Wärmeverlusten an den Wänden als Funktion eines motordrehzahlabhängigen Kennfelds,
   Bestimmen der Modelltemperatur in dem Zylinder durch ein nichtlineares dimensionsloses Modell des Drucks und der Temperatur in der Brennkammer in Abhängigkeit von dem Druck in dem Zylinder, der speziellen Gaskonstante in dem Zylinder, der spezifischen Wärme bei konstantem Gasvolumen in dem Zylinder, dem Volumen der Brennkammer und Kalibrierungsparametern im Zusammenhang mit Wärmeverlusten an den Wänden, und
   Bestimmen der Schätzung der eingeschlossenen Masse in dem Zylinder als Funktion der Modelltemperatur in dem Zylinder und der Messung des Drucks in dem Zylinder.

2. Verfahren nach Anspruch 1, bei dem zur Lösung des nichtlinearen dimensionslosen Modells ein Sliding Mode-Beobachter eingesetzt wird.

3. Verfahren nach einem der vorhergehenden Ansprüche, wobei das Kennfeld der Kalibrierungsparameter im Zusammenhang mit den Wärmeverlusten an den Wänden im Voraus auf dem Prüfstand in Abhängigkeit von einer Messung der Wärmeverluste an den Wänden, einer Messung der Temperatur des Zylinders und der Temperatur der Kühlflüssigkeit des Zylinders unter Anwendung des Woschni-Ansatzes bestimmt wird.

4. Verfahren nach einem der vorhergehenden Ansprüche, wobei die in dem Zylinder eingeschlossene Masse als Funktion der Modelltemperatur in dem Zylinder, der Messung des Drucks in dem Zylinder, des Volumens des Zylinders und der speziellen Konstante des in den Zylinder eingeleiteten Gases bestimmt wird.

**Claims**

1. Method for estimating the mass enclosed in the combustion chamber of a cylinder of a motor vehicle internal combustion engine, equipped with a means for measuring the pressure in the cylinder, a means for measuring the crankshaft angle with respect to a reference position and the temperature of the combustion chamber coolant, the method comprising steps during which:

   the rotational speed of the engine is determined from the crankshaft angle measurement,
   the engine load is determined,
   **characterized in that** it comprises the following steps:

   when the valves of the cylinder are fully closed and before the first injection of fuel,
   the volume of the cylinder is determined as a function of the crankshaft angle,

calibration parameters associated with the heat losses at the walls are determined as a function of a map that is a function of the rotational speed of the engine,

the modelled temperature in the cylinder is determined using a nonlinear dimensionless model of the pressure and the temperature in the combustion chamber, as a function of the cylinder pressure measurement, the specific gas constant for the gases in the cylinder, the specific heat at constant volume of the gases in the cylinder, the volume of the combustion chamber and calibration parameters associated with the heat losses at the walls, and the estimate for the mass enclosed in the cylinder is determined as a function of the modelled temperature in the cylinder and the measurement of cylinder pressure.

2. Method according to Claim 1, wherein, in order to solve the nonlinear dimensionless model, use is made of a sliding observer.

3. Method according to either one of the preceding claims, wherein the map of the calibration parameters associated with the heat losses at the walls is predetermined on test bed, as a function of a measurement of the heat losses at the walls, of a measurement of the cylinder temperature and of the cylinder coolant temperature, by applying Woschni's correlation.

4. Method according to any one of the preceding claims, wherein the mass enclosed in the cylinder is determined as a function of the modelled temperature in the cylinder, the measurement of cylinder pressure, the volume of the cylinder and the specific gas constant for the gases admitted to the cylinder.

**EP 3 384 145 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2009047412 A
- FR 2945320
- WO 2015059034 A
- JP 2007077838 A